# EUROPEAN PATENT APPLICATION

(11) **EP 2 317 464 A1**
(43) Date of publication of application: **04.05.2011**
(21) Application number: 10189367.5
(22) Date of filing: 29.10.2010
(51) Int. Cl.: G06Q 40/00

(54) **Managing quotes at a trade console**

(30) Priority: 30.10.2009 US 256410 P; 25.10.2010 US 911490
(71) Applicant: YellowJacket, Inc., New York NY 10022 (US)
(72) Inventor: Pechenik, Jacob, New York, NY 10012 (US); Barnes, Blake, New York, NY 10002 (US)
(74) Representative: Patentanwälte Ruff, Wilhelm, Beier, Dauster & Partner

(57) **Abstract**

Multiple financial product quotes for a particular product are aggregated into a product unit display, providing for user configuration related to a display of the quotes. A first sort attribute and a second sort attribute are selected or configured to provide the user with a display that includes the financial product quotes in groupings according to the first sort attribute and in ordered lists according to the second sort attribute. When a financial product quote is received, the quote is grouped with other financial product quotes for the particular product according to a first sort attribute. Each grouping is then ordered according to a second sort attribute to provide the desired product unit display. Various sources may provide the quotes, and extra information to enrich the quotes may be provided. Various indicators may be used to highlight or emphasize certain types of information in the product unit display.

## Description

### TECHNICAL FIELD

The disclosure is generally related to quotes and more specifically to managing a display of straddle quotes according to user-defined display preferences.

### BACKGROUND

A user at a trade console may be involved in or interested in multiple quotes. For example, a user may desire to sort a set of quotes according to a certain characteristic or criteria. A user may additionally wish to highlight or emphasize a quote that meets criteria established or set by the user. Moreover, a user may wish to monitor movement with respect to one or more quotes.

A straddle is an option strategy that consists of both a put and a call option with the same strike price and expiration for a particular underlying financial product. Straddles are typically quoted and traded with strikes at or near the price of the underlying financial product, often called "at the money" or "ATM" straddles.

A straddle can be used to take a position in or hedge exposure to volatility (as opposed to price), gain insight into the market perception of future volatility or help value other options. An ATM straddle is particularly suited for these purposes because it is delta neutral, meaning its value remains unchanged due to small changes in the value of the underlying financial product.

A quote for an ATM straddle can be used to calculate the ATM implied volatility of the straddle's expiration for a particular financial product. The ATM implied volatility for a particular expiration serves as a reference/anchor for the volatility curve of that expiration, which is used by traders to value their option positions in that particular expiration. The volatility curves of all expirations joined together create a "volatility surface", which traders can use to value their option positions across multiple expirations.

Thus, a system that aggregates multiple quotes, such as straddle quotes, into a single user interface, and that allows for user configuration related to a display of the quotes, is highly desirable.

### SUMMARY

A method is provided for managing quotes at a trade console. A financial product quote for a particular product is received, where the financial product quote is one or more of a firm bid to buy, a firm offer to sell, an indication to buy, an indication to sell, a trade at a certain price, and an invitation to join a trade at a certain price. The financial product quote is grouped with other financial product quotes for the particular product according to a first sort attribute. For each grouping according to the first sort attribute, the financial product quotes are ordered according to a second sort attribute. A product unit display for the particular product is displayed on an interface. The product unit display includes an ordered listing of a predefined number of financial product quotes according to the second sort attribute for each grouping according to the first sort attribute.

According to another embodiment, a method is provided for managing straddle quotes at a trade console. A straddle quote for a particular product is received, where the straddle quote includes a term and a strike, and is one or more of a firm bid to buy, a firm offer to sell, an indication to buy, an indication to sell, a trade at a certain price, and an invitation to join a trade at a certain price. The straddle quote is grouped with other straddle quotes for the particular product according to a first sort attribute. For each grouping according to the first sort attribute, the straddle quotes are ordered according to a second sort attribute. A product unit display for the particular product is displayed on an interface. The product unit display includes an ordered listing of a predefined number of straddle quotes according to the second sort attribute for each grouping according to the first sort attribute.

According to yet another embodiment, a method is provided for managing straddle quotes at a trade console where the straddle quotes are grouped according to term. The term is a single expiry of the particular product, of an option on the particular product, or of a grouping of options on the particular product; or a composition of expiries of the particular product, of options on the particular product, or of groupings of options on the particular product. For each grouping based on the term, the straddle quotes are ordered according to a second sort attribute. A product unit display is provided in which an ordered listing of a predefined number of straddle quotes according to the second sort attribute for each grouping based on the term is displayed.

A system for managing quotes at a trade console includes a quote management software application stored on a server that provides functionality to display financial product information representing financial product quotes. One or more user third party terminals are coupled to the server, and each terminal includes a data interface for accessing the server and the software application. One or more market data sources are also coupled to the server and serve to provide market data to the server for subsequent processing and displaying to a user. The quote management software application, when executed, causes the server to provide an interface and electronically receive information from a data source. The server electronically receives a financial product quote for a particular product. The server groups the financial product quote with other financial product quotes for the particular product according to a first sort attribute, and orders, for each grouping according to the first sort attribute, the financial product quotes according to a second sort attribute. The server displays a product unit display for the particular product on the interface, wherein the product unit display includes an ordered listing of a predefined number of financial product quotes according to the second sort attribute for each grouping according to the first sort attribute.

In one embodiment a method for managing quotes at a trade console comprises providing at least one computing device comprising a memory for storing instructions and a processor for executing said instructions, and utilizing said at least one computing device to perform the steps of providing an interface, electronically receiving a financial product quote for a particular product, wherein the financial product quote is one or more of a firm bid to buy, a firm offer to sell, an indication to buy, an indication to sell, a trade at a certain price, and an invitation to join a trade at a certain price, grouping the financial product quote with other financial product quotes for the particular product according to a first sort attribute, for each grouping according to the first sort attribute, ordering the financial product quotes according to a second sort attribute, and displaying a product unit display for the particular product on the interface, wherein the product unit display includes an ordered listing of a predefined number of financial product quotes according to the second sort attribute for each grouping according to the first sort attribute.

Preferably the first sort attribute comprises a term, wherein a term is a single expiry of the particular product, of an option on the particular product, or of a grouping of options on the particular product or a term is a composition of expiries of the particular product, of options on the particular product, or of groupings of options on the particular product.

Preferably the grouping according to the first sort attribute takes into account a number of expiries in the term and an expiration of a furthest dated expiry in the term.

Preferably the second sort attribute comprises one or more of (i) a spread value between a bid and an ask for the financial product quote, wherein the ordering is smallest to largest or largest to smallest; (ii) a time of receipt of the financial product quote, wherein the ordering is most recent to oldest or oldest to most recent; (iii) a deviation or a difference between a strike price and an underlying price for the financial product quote, wherein the ordering is closest to furthest or furthest to closest; (iv) a source of the financial product quote, wherein the ordering is most preferred source to least preferred source; (v) a quality of the financial product quote, wherein the ordering is firm price to indicative price or indicative price to firm price; (vi) a strike price for the financial product quote, wherein the ordering is largest to smallest or smallest or largest; and (vii) a user-supplied value, wherein the ordering is based on a user-supplied ordering.

Preferably if the second sort attribute comprises more than one attribute, the second sort attributes are assigned a priority to be taken into account for the ordering of the financial product quotes.

Preferably the method further comprises creating a synthetic group according to the first sort attribute if no financial product quotes have been received for that particular first sort attribute or if no financial product quotes for that particular first sort attribute match the second sort attribute.

Preferably electronically receiving a financial product quote for a particular product comprises electronically receiving the financial product quote from one or more data sources via one or more of a user interface, an application programming interface, an instant message, an email message, a voice message, and an order message through an electronic system.

Preferably electronically receiving a financial product quote for a particular product comprises combining aspects of two or more financial product quotes to create a synthetic financial product quote, wherein the two or more financial product quotes are received from one or more data sources.

Preferably the product unit display further comprises fields that display information related to the financial product quote, wherein the information is received from one or more data sources.

Preferably the method further comprises sending one or more financial product quotes through an application programming interface (API), receiving user input related to the financial product quote through the API, and displaying the user input in the product unit display.

Preferably the financial product quote is a straddle quote on the particular product.

Preferably the product unit display further comprises a reply selection field configured to allow a user to respond to a financial product quote, wherein the reply is sent via one or more of an instant message, an email message, a voice message, and an order message through an electronic system.

Preferably the product unit display further comprises one or more subviews each associated with a corresponding grouping, wherein the subview comprises an ordered listing of a remainder of or a portion of financial product quotes outside of the predefined number of financial product quotes according to the second sort attribute.

Preferably the product unit display further comprises one or more menus, selection fields, and dropdown bars configured to allow a user to specify the first sort attribute, the second sort attribute, and the predefined number of financial product quotes.

Preferably the method further comprises displaying multiple product unit displays on the interface, wherein each product unit display corresponds to a particular product.

In another embodiment a method for managing straddle quotes at a trade console, the method comprises providing at least one computing device comprising a memory for storing instructions and a processor for executing said instructions, and utilizing said at least one computing device to perform the steps of providing an interface, electronically receiving a straddle quote for a particular product, wherein the straddle quote comprises a term, a strike, and one or more of a firm bid to buy, a firm offer to sell, an indication to buy, an indication to sell, a trade at a certain price, and an invitation to join a trade at a certain price, grouping the straddle quote with other straddle quotes for the particular product according to a first sort attribute, for each grouping according to the first sort attribute, ordering the straddle quotes according to a second sort attribute, and displaying a product unit display for the particular product on the interface, wherein the product unit display includes an ordered listing of a predefined number of straddle quotes according to the second sort attribute for each grouping according to the first sort attribute.

Preferably the first sort attribute comprises the term, wherein the term is a single expiry of the particular product, of an option on the particular product, or of a grouping of options on the particular product; or wherein a term is a composition of expiries of the particular product, of options on the particular product, or of groupings of options on the particular product.

Preferably the grouping according to the first sort attribute takes into account a number of expiries in the term and an expiration of a furthest dated expiry in the term.

Preferably the second sort attribute comprises one or more of (i) a spread value between a bid and an ask for the straddle quote, wherein the ordering is smallest to largest or largest to smallest; (ii) a time of receipt of the straddle quote, wherein the ordering is most recent to oldest or oldest to most recent; (iii) a deviation or a difference between a strike price and an underlying price for the straddle quote, wherein the ordering is closest to furthest or furthest to closest; (iv) a source of the straddle quote, wherein the ordering is most preferred source to least preferred source; (v) a quality of the straddle quote, wherein the ordering is firm price to indicative price or indicative price to firm price; (vi) a strike price for the straddle quote, wherein the ordering is largest to smallest or smallest or largest; and (vii) a user-supplied value, wherein the ordering is based on a user-supplied ordering.

Preferably if the second sort attribute comprises more than one attribute, the second sort attributes are assigned a priority to be taken into account for the ordering of the straddle quotes.

Preferably the method further comprises creating a synthetic group according to the first sort attribute if no straddle quotes have been received for that particular first sort attribute or if no straddle quotes for that particular first sort attribute match the second sort attribute.

Preferably electronically receiving a straddle quote for a particular product comprises electronically receiving the straddle quote from one or more data sources via one or more of a user interface, an application programming interface, an instant message, an email message, a voice message, and an order message through an electronic system.

Preferably electronically receiving a straddle quote for a particular product comprises combining aspects of two or more straddle quotes to create a synthetic straddle quote, wherein the two or more straddle quotes are received from one or more data sources.

Preferably the product unit display further comprises fields that display information related to the straddle quote, wherein the information is received from one or more data sources.

Preferably the method further comprises sending one or more straddle quotes through an application programming interface (API), receiving user input related to the straddle quote through the API, and displaying the user input in the product unit display.

Preferably the method the product unit display further comprises a reply selection field configured to allow a user to respond to a straddle quote, wherein the reply is sent via one or more of an instant message, an email message, a voice message, and an order message through an electronic system.

Preferably the product unit display further comprises one or more subviews each associated with a corresponding grouping, wherein each subview comprises an ordered listing of a remainder of or a portion of straddle quotes outside of the predefined number of straddle quotes according to the second sort attribute.

Preferably the product unit display further comprises one or more menus, selection fields, and dropdown bars configured to allow a user to specify the first sort attribute, the second sort attribute, and the predefined number of straddle quotes.

Preferably the method further comprises displaying multiple product unit displays on the interface, wherein each product unit display corresponds to a particular product.

In another embodiment a method for managing straddle quotes at a trade console comprises providing at least one computing device comprising a memory for storing instructions and a processor for executing said instructions, and utilizing said at least one computing device to perform the steps of providing an interface, electronically receiving a straddle quote for a particular product, wherein the straddle quote comprises a term, a strike, and one or more of a firm bid to buy, a firm offer to sell, an indication to buy, an indication to sell, a trade at a certain price, and an invitation to join a trade at a certain price, grouping the straddle quote with other straddle quotes for the particular product according to a first sort attribute; wherein the first sort attribute comprises the term, wherein the term is a single expiry of the particular product, of an option on the particular product, or of a grouping of options on the particular product; or wherein a term is a composition of expiries of the particular product, of options on the particular product, or of groupings of options on the particular product; wherein the grouping according to the term takes into account a number of expiries in the term and an expiration of a furthest dated expiry in the term, for each grouping according to the first sort attribute, ordering the straddle quotes according to a second sort attribute, and displaying a product unit display for the particular product on the interface, wherein the product unit display includes an ordered listing of a predefined number of straddle quotes according to the second sort attribute for each grouping according to the first sort attribute.

Preferably the second sort attribute comprises one or more of (i) a spread value between a bid and an ask for the straddle quote, wherein the ordering is smallest to largest or largest to smallest; (ii) a time of receipt of the straddle quote, wherein the ordering is most recent to oldest or oldest to most recent; (iii) a deviation or a difference between a strike price and an underlying price for the straddle quote, wherein the ordering is closest to furthest or furthest to closest; (iv) a source of the straddle quote, wherein the ordering is most preferred source to least preferred source; and (v) a quality of the straddle quote, wherein the ordering is firm price to indicative price or indicative price to firm price; (vi) a strike price for the straddle quote, wherein the ordering is largest to smallest or smallest or largest; and (vii) a user-supplied value, wherein the ordering is based on a user-supplied ordering.

Preferably if the second sort attribute comprises more than one attribute, the second sort attributes are assigned a priority to be taken into account for the ordering of the straddle quotes.

Preferably the method further comprises creating a synthetic group according to the term if no straddle quotes have been received for that particular term or if no straddle quotes for that particular term match the second sort attribute.

Preferably electronically receiving a straddle quote for a particular product comprises electronically receiving the straddle quote from one or more data sources via one or more of a user interface, an application programming interface, an instant message, an email message, a voice message, and an order message through an electronic system.

Preferably electronically receiving a straddle quote for a particular product comprises combining aspects of two or more straddle quotes to create a synthetic straddle quote, wherein the two or more straddle quotes are received from one or more data sources.

Preferably the product unit display further comprises fields that display information related to the straddle quote, wherein the information is received from one or more data sources.

Preferably the method further comprises sending one or more straddle quotes through an application programming interface (API), receiving user input related to the straddle quote through the API, and displaying the user input in the product unit display.

Preferably the product unit display further comprises a reply selection field configured to allow a user to respond to a straddle quote, wherein the reply is sent via one or more of an instant message, an email message, a voice message, and an order message through an electronic system.

Preferably the product unit display further comprises one or more subviews each associated with a corresponding grouping, wherein each subview comprises an ordered listing of a remainder of or a portion of straddle quotes outside of the predefined number of straddle quotes according to the second sort attribute.

Preferably the product unit display further comprises one or more menus, selection fields, and dropdown bars configured to allow a user to specify the first sort attribute, the second sort attribute, and the predefined number of straddle quotes.

Preferably the method further comprises displaying multiple product unit displays on the interface, wherein each product unit display corresponds to a particular product.

In another embodiment a system for managing quotes at a trade console, the system comprises a quote management software application stored on a server, the quote management software application providing functionality to display financial product quotes, one or more user third party terminals coupled to the server, the user third party terminals comprising a data interface for accessing the server and the quote management software application stored thereon, and one or more market data sources coupled to the server for providing market data to the server, wherein the quote management software application, when executed, causes the server to provide an interface, electronically receive a financial product quote for a particular product, wherein the financial product quote is one or more of a firm bid to buy, a firm offer to sell, an indication to buy, an indication to sell, a trade at a certain price, and an invitation to join a trade at a certain price, group the financial product quote with other financial product quotes for the particular product according to a first sort attribute, for each grouping according to the first sort attribute, order the financial product quotes according to a second sort attribute, and display a product unit display for the particular product on the interface, wherein the product unit display includes an ordered listing of a predefined number of financial product quotes according to the second sort attribute for each grouping according to the first sort attribute.

Preferably the first sort attribute comprises a term, wherein a term is a single expiry of the particular product, of an option on the particular product, or of a grouping of options on the particular product; or wherein a term is a composition of expiries of the particular product, of options on the particular product, or of groupings of options on the particular product.

Preferably the grouping according to the first sort attribute takes into account a number of expiries in the term and an expiration of a furthest dated expiry in the term.

Preferably the second sort attribute comprises one or more of (i) a spread value between a bid and an ask for the financial product quote, wherein the ordering is smallest to largest or largest to smallest; (ii) a time of receipt of the financial product quote, wherein the ordering is most recent to oldest or oldest to most recent; (iii) a deviation or a difference between a strike price and an underlying price for the financial product quote, wherein the ordering is closest to furthest or furthest to closest; (iv) a source of the financial product quote, wherein the ordering is most preferred source to least preferred source; (v) a quality of the financial product quote, wherein the ordering is firm price to indicative price or indicative price to firm price; (vi) a strike price for the financial product quote, wherein the ordering is largest to smallest or smallest or largest; and (vii) a user-supplied value, wherein the ordering is based on a user-supplied ordering.

Preferably if the second sort attribute comprises more than one attribute, the second sort attributes are assigned a priority to be taken into account for the ordering of the financial product quotes.

Preferably the quote management software application further causes the server to create a synthetic group according to the first sort attribute if no financial product quotes have been received for that particular first sort attribute or if no financial product quotes for that particular first sort attribute match the second sort attribute.

Preferably the server electronically receiving a financial product quote for a particular product comprises the server electronically receiving the financial product quote from the one or more market data sources via one or more of a user interface, an application programming interface, an instant message, an email message, a voice message, and an order message through an electronic system.

Preferably the server electronically receiving a financial product quote for a particular product comprises the server combining aspects of two or more financial product quotes to create a synthetic financial product quote, wherein the two or more financial product quotes are received from one or more data sources.

Preferably the product unit display further comprises fields that display information related to the financial product quote, wherein the information is received from one or more data sources

Preferably the quote management software application further causes the server to send one or more financial product quotes through an application programming interface (API), receive user input related to the financial product quote through the API, and display the user input in the product unit display.

Preferably the financial product quote is a straddle quote on the particular product.

Preferably the product unit display further comprises a reply selection field configured to allow a user to respond to a financial product quote, wherein the reply is sent via one or more of an instant message, an email message, a voice message, and an order message through an electronic system.

Preferably the product unit display further comprises one or more subviews each associated with a corresponding grouping, wherein each subview comprises an ordered listing of a remainder of or a portion of financial product quotes outside of the predefined number of financial product quotes according to the second sort attribute.

Preferably the product unit display further comprises one or more menus, selection fields, and dropdown bars configured to allow a user to specify the first sort attribute, the second sort attribute, and the predefined number of financial product quotes.

Preferably the quote management software application further causes the server to display multiple product unit displays on the interface, wherein each product unit display corresponds to a particular product.

### BRIEF DESCRIPTION OF THE DRAWINGS

The foregoing summary and the following detailed description are better understood when read in conjunction with the appended drawings. Exemplary embodiments are shown in the drawings, however, it is understood that the embodiments are not limited to the specific methods and instrumentalities depicted herein. In the drawings:

FIGS. 1-5 illustrate exemplary product unit displays, according to various embodiments.

FIG. 6 illustrates an exemplary preference edit box for editing preferences related to a product unit display, according to an embodiment.

FIG. 7 illustrates an exemplary reply box related to a product unit display, according to an embodiment.

FIG. 8 is a flowchart illustrating a method for managing quotes at a trade console, according to an embodiment.

FIG. 9 is a block diagram of an exemplary system for managing quotes at a trade console.

### DETAILED DESCRIPTION

A user at a trade console may access financial product quotes via a user interface according to various embodiments of the present disclosure. The interface provided via the trade console provides the user with the ability to view and sort various quotes on a product unit display according to user preferences.

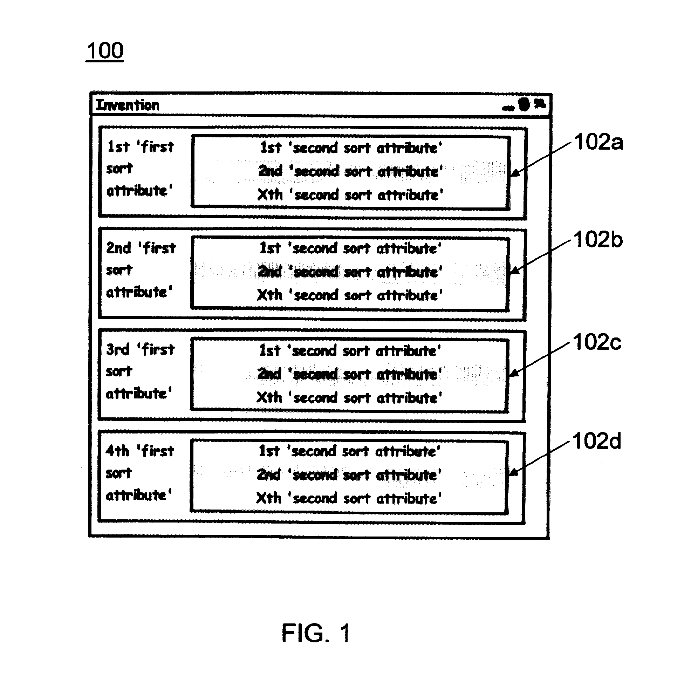

With reference to FIG. 1, a product unit display 100, according to an embodiment, is illustrated. The product unit display 100 displays financial product quotes for a particular product. A financial product quote may be defined as one or more of a firm bid to buy, a firm offer to sell, an indication to buy, an indication to sell, a trade at a certain price, and an invitation to join a trade at a certain price. For example, a financial product quote may be a combination of a firm bid to buy and a firm offer to sell, or a combination of an indication to buy and an indication to sell. A user accessing a trade console may display or view one or more product unit displays via an interface of the trade console. The particular product or products may be selected by the user.

A first sort attribute and a second sort attribute may also be selected or configured to provide the user with a display that meets user criteria and preferences with respect to viewing the financial product quotes.

For example, a first sort attribute may be used to group financial product quotes with other financial product quotes for the particular product. The grouping is established based on the first sort attribute, which is a parameter related to the financial product quotes. With reference to FIG. 1, in the exemplary product unit display 100, four groupings 102a-102d are illustrated, where the financial product quotes in a particular group each have in common the first sort attribute. For example, the financial product quotes in group 102a each have a parameter of the "1st 'first sort attribute'." Similarly, the financial product quotes in group 102c each have a parameter of the "3rd 'first sort attribute'."

Within each grouping 102a-102d, the financial product quotes are ordered according to the second sort attribute. Additionally, the user may select a number of financial product quotes to be displayed. For example, in the exemplary product unit display 100, three financial product quotes are displayed for each grouping 102a-102d. Although four groupings and three quotes in each grouping are displayed in the exemplary product unit display 100, the groupings and quotes are not limited to any particular number.

Thus, the first sort attribute and the second sort attribute are used to display a product unit display 100 for the particular product. The product unit display 100 includes an ordered listing of a predefined number of financial product quotes according to the second sort attribute for each grouping according to the first sort attribute.

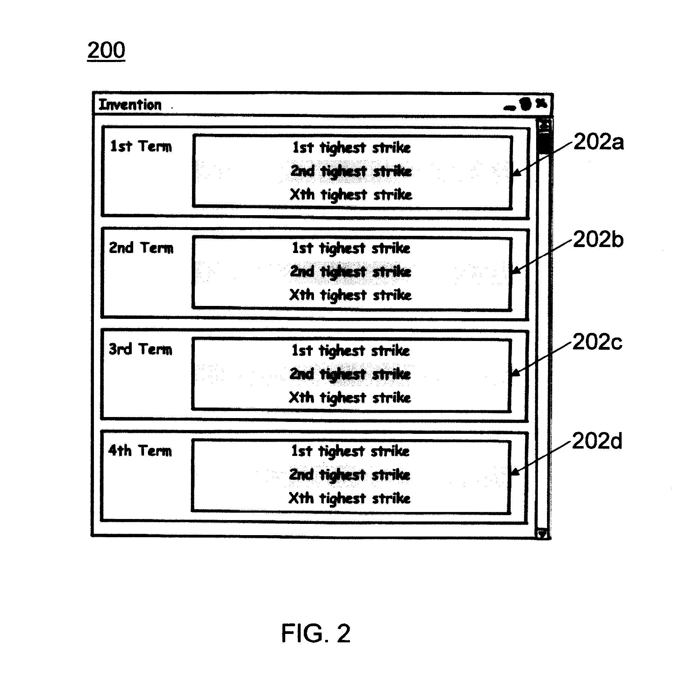

FIG. 2 provides an example of a more specific product unit display 200. In the exemplary product unit display 200, the first sort attribute is term, and the second sort attribute is tightest strike for an option on a pre-selected or otherwise chosen particular product. The quotes with a term of Term 1 are grouped together in grouping 202a, while those with a term of Term 2 are grouped together in grouping 202b, those with a term of Term 3 are grouped together in grouping 202c, and those with a term of Term 4 are grouped together in grouping 202d. The product unit display 200 may be a display for straddles, calls, or puts, for example. However, the product unit display 200 is not so limited and other quotes may be presented in the product display unit 200.

A term may be a single expiry of the particular product or a composition of expiries of the particular product. For example a term may be "Dec 10" (i.e., a single expiry) or "Q111" (first quarter of 2011, i.e., a composition of expiries). Examples of a term include, but are not limited to, an hour, a day, a month, a quarter, and a calendar year. A term may be any desired time period that is established for a financial product quote.

When grouping according to the first sort attribute of term, the grouping takes into account the number of expiries in the term. For example, the grouping together of quotes with a single expiry may precede the grouping of quotes with a composition of expiries on the product unit display 200. As an example, if the financial product quotes for the product unit display 200 include those with a term of Dec10, Jan11, Feb11, Mar11, Q111, and Q211, the groupings will be ordered Dec10, Jan11, Feb 11, Mar11, Q111, and Q211.

The grouping according to the first sort attribute of term also takes into account an expiration of a furthest dated expiry in a term. As an example, if the financial product quotes for the product unit display 200 include those with a term of Q111 and Cal11 (calendar year of 2011), the groupings will be ordered Q111 and Cal11 as the furthest dated expiry of Q111 is Mar11 while that of Cal11 is Dec11.

A term may also be a single expiry of an option on the particular product or of a grouping of options on the particular product. A term may also be a composition of expiries of options on the particular product or of groupings of options on the particular product.

With further reference to FIG. 2, the quotes in each grouping 202a-202d are ordered according to tightest strike. That is, the quote with the smallest difference between bid and ask (i.e., the tightest) is shown first, while the quote with the next smallest difference is shown second, and so on. Three quotes are shown in each grouping 202a-202d, indicating that the user selected three as the predefined number of quotes to be shown for each grouping. If the user does not select a predefined number of quotes, a system generated number may instead be used, according to some embodiments. The system generated number may be, for example, the predefined number that the user most recently used.

Examples of second sort attributes include a spread value between a bid and an ask for the financial product quote, where the ordering is smallest to largest or largest to smallest; a time of receipt of the financial product quote, where the ordering is most recent to oldest or oldest to most recent; a deviation or a difference between a strike price and an underlying price for the financial product quote, where the ordering is closest to furthest or furthest to closest; a source of the financial product quote, where the ordering is most preferred source to least preferred source; a quality of the financial product quote, where the ordering is firm price to indicative price or indicative price to firm price; a strike price for the financial product quote, where the ordering is largest to smallest or smallest or largest; and a user-supplied value, where the ordering is based on a user-supplied ordering. The user-supplied value and user-supplied ordering may be provided through an application programming interface (API) as further described below.

A deviation between a strike price and an underlying price refers to a degree to which the strike price differs from the underlying price. The degree may be calculated by various formulas, such as, for example, the degree may be measured as a logarithmic function (i.e., natural logarithm of the strike price divided by the underlying price). Other functions may also be used to represent the deviation.

One or more second sort attributes may be used to establish the ordering of the financial product quotes. A priority of the various second sort attributes may be established to resolve any ties that may exist between financial product quotes. For example, if the second sort attribute with the highest priority is the spread value and two financial product quotes have the same bid and ask resulting in the same spread value, the ordering may turn to the second sort attribute with the next highest priority. If this is, for example, the time of receipt, the financial product quote most recently received will be the financial product quote ordered before the other financial product quote, assuming that the ordering according to the time of receipt is based on most recent to oldest.

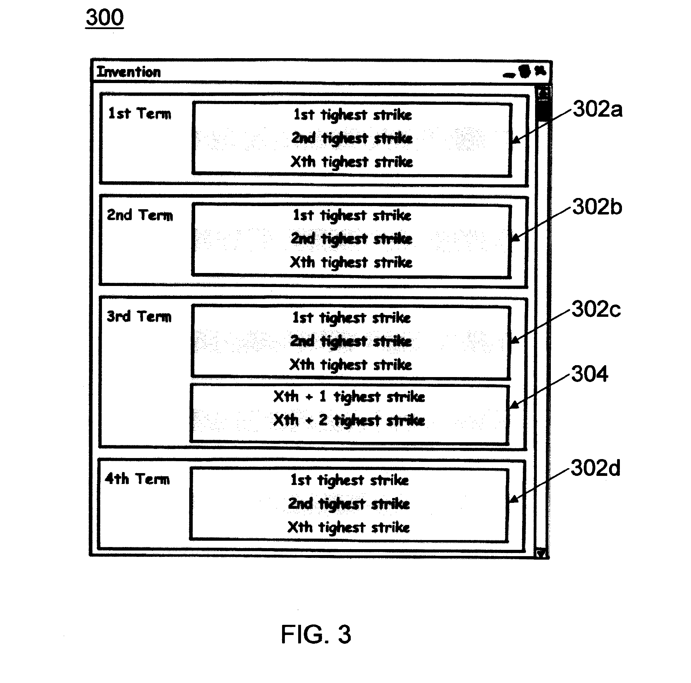

With reference to FIG. 3, a product unit display 300 according to an additional embodiment is illustrated. The product unit display 300 includes four groupings 302a, 302b, 302c, and 302d. The product unit display 300 further includes a subview 304. The subview 304 is associated with a corresponding grouping; in this case grouping 302c. The subview 304 includes an ordered listing of a remainder of or a portion of financial product quotes outside of the predefined number of financial product quotes according to the second sort attribute. For example, if the predefined number of financial product quotes selected to be shown is X, a subview 304 may include X+n, to display n extra financial product quotes that are part of the grouping. In the example shown in FIG. 3, two extra financial product quotes are provided. The provision of a subview may through selection of a corresponding button or icon provided on the product unit display 300.

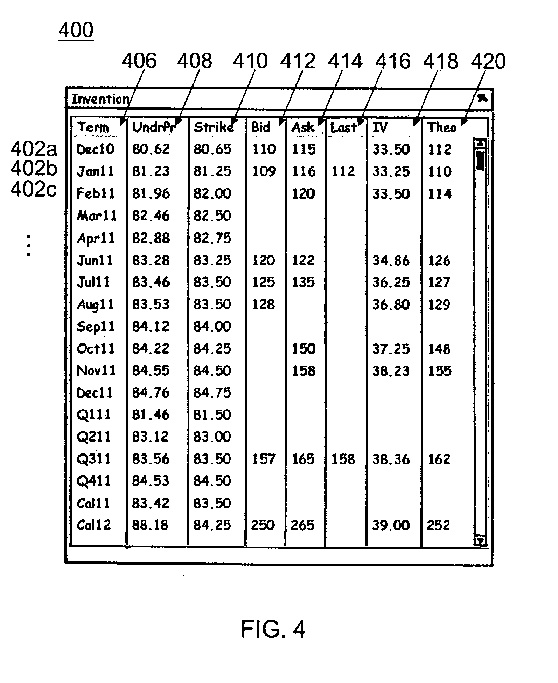

FIG. 4 provides an illustration of a more detailed product unit display 400. In particular, the product unit display 400 includes various columns that indicate information related to straddle quote, with each row corresponding to a straddle quote. Fewer or additional columns may be displayed, which may be controlled by system definitions or by user preferences, for example. The columns include, but are not limited to: Term 406, as described above; UndrPr 408, indicating the underlying price for the quote; Strike 410, indicating the strike price for the quote; Bid 412, indicating the bid for the quote; Ask 414, indicating the ask for the quote; Last 416, indicating the last trade for the quote; IV 418, indicating the volatility calculated by the midpoint of the bid/ask; and Theo 420, indicating the theoretical price for the quote.

In the exemplary product unit display 400, the first sort attribute is term and the predefined number of financial product quotes to display according to the second sort attribute is one, resulting in one straddle quote being displayed for each term (i.e., the groupings are 402a-402n). The terms are ordered, as described above, with a number of expiries in the term and an expiration of a furthest dated expiry in a term taken into account.

According to an embodiment, synthetic groups may be created according to the first sort attribute if a particular financial product quote does not have data that is being used to create the ordering according to the second sort attribute. For example, as shown in the exemplary product unit display 400 of FIG. 4, the groupings that correspond to terms Dec11, Q111, and Q211 are empty because no straddle quotes for each respective term have been received or because the straddle quotes for each respective term don't match the second sort attribute. Thus, synthetic groupings (i.e., the groupings of Dec11, Q111, and Q211) are created to continue the ordering of the terms although no quote data has been received for these particular terms.

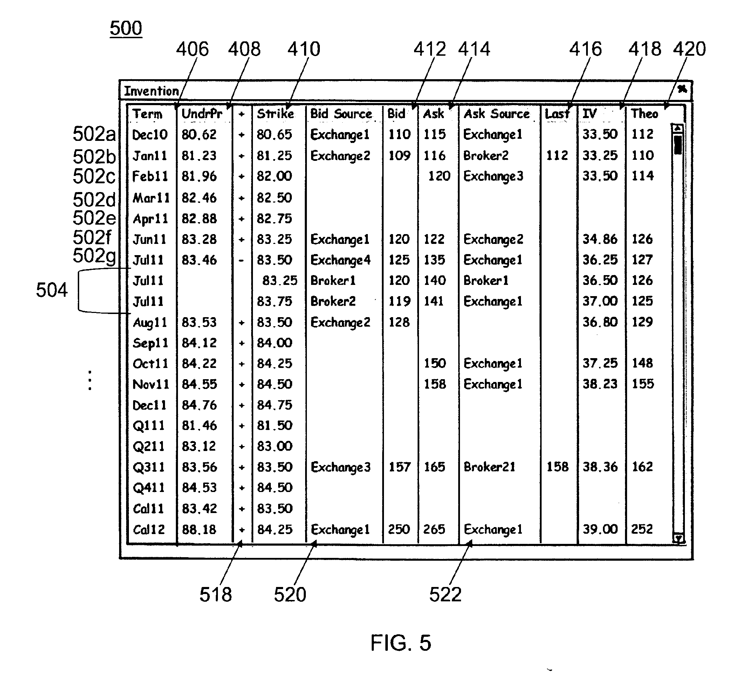

FIG. 5 provides an illustration of yet a more detailed product unit display 500. Included on the product unit display 500 are additional columns: + 518, indicating if additional quotes exist but are not shown for the grouping; Bid Source 520, indicating the source that provided the bid; and Ask Source 522, indicating the source that provided the ask. Term 406, UndrPr 408, Strike 410, Bid 412, Ask 414, Last 416, IV 418, and Theo 420 are also shown.

Other columns may be included in the exemplary product unit displays. The columns shown may be displayed based on user preferences or system definitions. Some examples include, without limit: sell, an indicator that shows if a sell has occurred; buy, an indicator that shows if a buy has occurred; implied volatility spread, the spread between the current term and the previous term; last implied volatility, which indicates the volatility implied by the most recent trade; time, indicating the amount of time that has passed since the most recent trade; price, the price of the most recent trade; and strike, the strike of the most recent trade.

With further reference to the exemplary product unit display 500 of FIG. 5, the first sort attribute is term and the predefined number of financial product quotes (i.e., straddle quotes) to display according to the second sort attribute is one, resulting in one financial product quote being displayed for each term (i.e., the groupings are 502a, ..., 502f, 502g, ...). The terms are ordered, as described above, with a number of expiries in the term and an expiration of a furthest dated expiry in a term taken into account.

Moreover, a subview 504 is provided. The subview 504 provides two additional financial product quotes for the grouping 502g ("Jul11"). According to an embodiment, the subview 504 (or any subview for a corresponding grouping 502) may be displayed by user selection of the "+" sign in the column + 518. A "+" sign in the column + 518 may be used to indicate that a term (i.e., first sort attribute) has a number of different quotes. User selection of such a "+" sign may serve to expand the display of the information to present to the user the different quotes for the term or grouping. The user may select the "+" sign through manipulation of a pointing device or user selection device, such as a mouse, for example. Moreover, a number (not shown) in a column or area adjacent or near the "+" sign in the column + 518 may serve to indicate the number of different quotes for a term or grouping.

With further reference to FIG. 5, the columns bid source 520 and ask source 522 include identifiers of the source of the bid and ask, respectively. Some examples include various exchanges and brokers. The financial product quotes may be received from one or more data sources via various means, including a user interface, an application programming interface, an instant message, an email message, a voice message, and an order message through an electronic system, for example.

Moreover, information related to the financial product quotes may be sent through an application programming interface (API) to enrich the quotes, which may be helpful to a user in making a determination to buy or to sell, for example. User input related to a financial product quote may be received through an API, and the user input may then be displayed in the product unit display. For example, with reference to the product unit display 500 of FIG. 5, the data in the columns IV 418 and Theo 420 are examples of user input related to the financial product quotes. Other examples may include, but are not limited to, position information, alert information, and "Greeks." User input may be generated from a separate model and then sent via the API to be incorporated in the product unit display.

Other information related to the financial product quotes may be provided from one or more data sources. For example, the underlying price data in the column UndrPr 408 may be provided to enhance the quotes, which may provide the user with additional and beneficial information.

Some of the financial product quotes displayed in the product unit displays may be synthetic quotes. A synthetic quote may be a quote in which aspects of two or more financial product quotes are combined or merged, thereby forming a synthetic financial product quote. The two or more financial product quotes may be received from one or more data sources. For example, again with reference to product unit display 500 of FIG. 5, the financial product quote represented in grouping 502b is a synthetic quote where "Exchange2" provided the bid (109) and "Broker2" provided the ask (116). The synthetic quote may include the best bid and the best offer for a given term, for example. "Exchange2" may have sent an order with a bid of 109 and an offer of 120, but since "Broker2" has a better offer (116), the synthetic quote was created to combine the better offer with the bid.

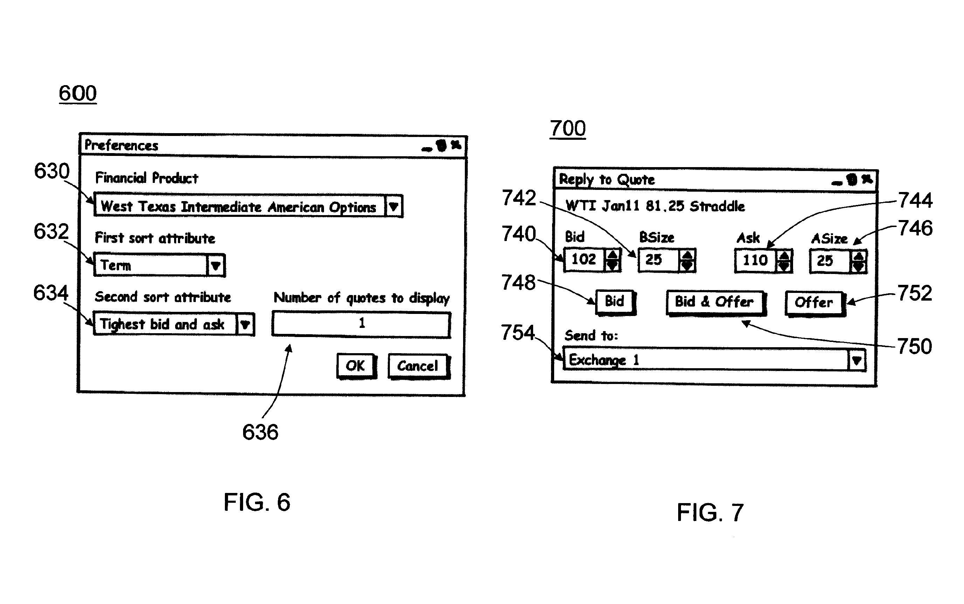

Now with reference to FIG. 6, an exemplary preference edit box 600 for editing preferences related to a product unit display, according to an embodiment, is illustrated. The preference edit box 600 may be used for creating a product unit display, such as the product unit displays 100-500 described above. The preference edit box 600 includes a financial product selection field 630, a first sort attribute selection field 632, and second sort attribute selection field 634, and a number of quotes to display field 636. Each field 630, 632, 634, and 636 provides for user selection of the parameters described above for a user to view a product unit display according to user preferences. Fields 630, 632, and 634 may be dropdown bars, while field 636 may be a manual entry box, for example. Menus may also be provided to set the desired attributes.

Other fields may be included in the preference edit box, or in other boxes. For example, a priority selection field may be provided to indicate the priority given to a selected second sort attribute. Additional fields may be provided to indicate other second sort attributes and their associated priorities. Moreover, depending on the attribute that is selected, other selection fields may be generated. For example, if the user selects source as the second sort attribute, the user may be then be prompted to specify a listing or indication of preferred sources.

Some examples of additional fields include, but are not limited to, a name field to allow a user to enter a desired name for the product unit display that is being created, a source selection field that provides various options related to the source of the market data, a number of months selection field that provides various options related to the time period in which the market data is provided from the selected source.

Various other selection tools, such as buttons, menus, or dropdown windows, may be provided to select or establish other user preferences related to information provided in the product unit displays. For example, a hide brokers button (not shown) allows for a user to select the option to hide (i.e., not show) brokers on a product unit display. A live only button (not shown) provides the user with the option to only display terms that have received quotes or that have been traded during the current trading day or other desirable time period.

Moreover, various indicators may be provided to highlight or indicate various events or quotes that meet certain criteria. For example, as new market data representing a financial product quote is received, the new information may be automatically populated in the product unit display. A new quote indicator (not shown) may serve to indicate receipt of a new quote. The new quote indicator may be displayed for a brief period of time, the time duration of which may be established by the user. An inactive indicator may be used to portray that a particular quote has reached its age limit and is no longer relevant. Moreover, the user may select an option to remove or hide inactive quotes. Another indicator may include a time indicator that allows for user selection of relevant age limit for displaying quotes. The time indicator may be a dropdown window that provides different time options which may be selected by the user. For example, the user may indicate that quotes older than three minutes, five minutes, or ten minutes are to be considered inactive for the particular user. Quotes that meet the selected time criteria may be displayed as inactive according to the inactive indicator described above. Additionally, the time indicator may also include an option for "last per term," as well as "specific run."

The various indicators may be a highlighted, shaded, or otherwise emphasized portion on the display (i.e., enclosed in an identifying box). Additionally or alternatively, the indicators may be a message box that momentarily appears over a portion of the product unit display. Other visual indicators may be also be used.

FIG. 7 illustrates an exemplary reply box 700 related to a product unit display, according to an embodiment. The reply box 700 may be used for responding to a financial product quote on a product unit display. The reply box 700 may be provided upon user selection of a particular quote, such as by clicking on the quote or an indicator on the product unit display to initiate a reply. The reply box 700 may include a bid selection field 740, a bid size selection field 742, an ask selection field 714, an ask size selection field 746, and a send to selection field 754 to allow a user to enter the desired reply parameters for the selected quote. Also includes are a bid button 748, a bid and offer button 750, and an offer button 752 for sending the reply. The selected quote may also be indicated within a portion of the reply box 700. The reply may be sent via one or more of an instant message, an email message, a voice message, and an order message through an electronic system.

According to an embodiment, when a trade occurs for a financial product quote, columns or information in the product unit display related to the trade (i.e., last implied volatility, time, price, and strike) is accordingly updated with the relevant trade information. Moreover, the information in the relevant trade columns, if provided, as well as in the bid and ask columns, may momentarily flash or change in form (i.e., momentarily be presented in bold font) to indicate the occurrence of the trade to the user. After the momentary change of the information in the relevant trade columns, the information may be presented in a distinguishing color or other form to indicate the trade. Distinguishing colors or font forms may also be used to indicate features of the trade to a user. For example, if the implied volatility of a trade is higher than the previous implied volatility, then the value in the last implied volatility column of the product unit display may be presented in a first color. If, on the other hand, the implied volatility of a trade is lower than the previous implied volatility, then the value in the last implied volatility column of the product unit display may be presented in a second color.

A user may be presented with a trade message when the user's selection device, such as a mouse, hovers over the trade fields in the trade columns (i.e., last implied volatility, time, price, and strike) of the product unit display. The trade message may include, for example, time, contact, and other information indicating the trade details.

Yet another additional feature of the product unit display is related to a filter that prevents duplicate quotes from being displayed. When a straddle quote is received, the quote will be analyzed to determine if the straddle quote already exists (i.e., same term, strike, and price). If the straddle quote does exist, it will be replaced by the new straddle quote.

Another feature serves to distinguish straddle runs from individual straddle quotes. A straddle run is a string of multiple quotes for a particular strike and term. A user may select a particular color or other distinguishing feature to be used to display straddle runs.

The additional functionalities described above, as well as other user preferences and functionalities, may be accessed, established, and updated through the product unit displays described above or through other displays provided to the user. The selection of these features may be provided via various tool bars, buttons, pop-up messages, dropdown windows, and the like. A default selection may exist for each feature, thus alleviating the requirement for user selection. Alternatively, a user may be required to establish preferences for a particular feature to be implemented.

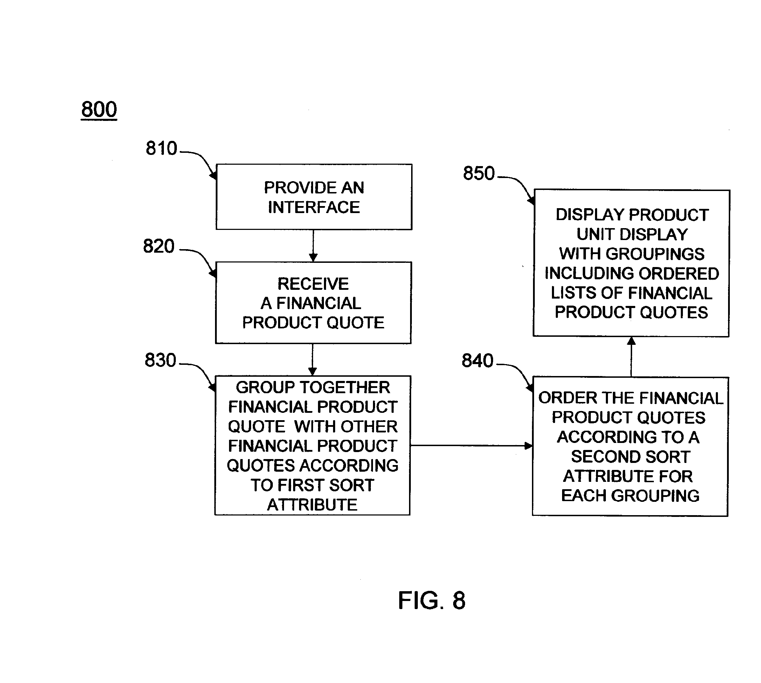

With reference to FIG. 8, a method 800 for managing quotes at a trade console, according to an embodiment, is illustrated. One or more computing devices that include a memory for storing instructions and a processor for executing the instructions may be utilized to perform the steps of the method 800.

At 810, an interface is provided. The interface provides a means for a user to establish user preferences with respect to viewing straddle quotes on a straddle quote display, such as the exemplary product unit displays 200-500 described above. The interface also provides a means (for example, creation dialog box 200 and preference edit box 300) for creating a product unit display. The interface also allows for a user to view the quotes according to the user preferences.

At 820, a financial product quote for a particular product is electronically received. As described above, the financial product quote may be one or more of a firm bid to buy, a firm offer to sell, an indication to buy, an indication to sell, a trade at a certain price, and an invitation to join a trade at a certain price. The financial product quote may be received from one or more data sources via one or more of a user interface, an application programming interface, an instant message, an email message, a voice message, and an order message through an electronic system.

At 830, the financial product quote is grouped with other financial product quotes for the particular product according to a first sort attribute.

At 840, for each grouping according to the first sort attribute, the financial product quotes are ordered according to a second sort attribute.

At 850, a product unit display for the particular product is displayed on the interface. The product unit display includes an ordered listing of a predefined number of financial product quotes according to the second sort attribute for each grouping according to the first sort attribute.

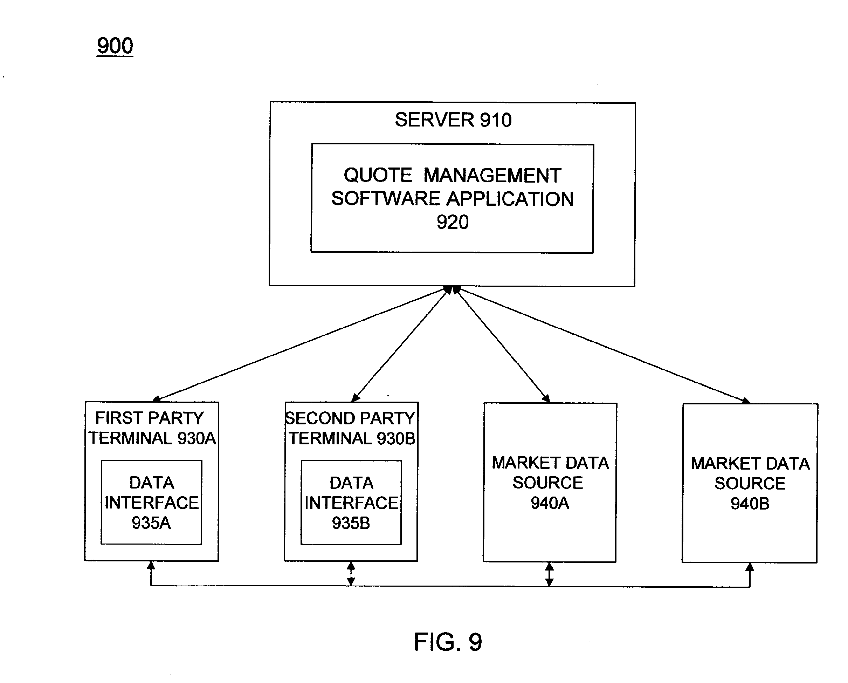

An exemplary system 900 for managing quotes at a trade console may include components for performing some or all portions of the above-described method 800 and for providing the displays and associated functionalities of FIGS. 1-7. With reference to FIG. 9, the components may include, for example, a server 910 on which various software applications, such as a quote management software application 920, is stored. The system 900 may further include one or more user third party terminals 930 that are coupled to the server 910. The terminals 930 may be coupled to the server 910 through a wired or wireless network, such as, for example, the Internet. Also coupled to the server 910 through a wired or wireless network are one or more market data sources 940.

Each third party terminal 930 may include, according to an embodiment, a data interface 935 for accessing the server 910 and the software application 920 stored thereon. Shown in FIG. 9 are two third party terminals 930, including a first party terminal 930a and a second party terminal 930b, respectively including a data interface 935a and 935b. However, the system 900 is not limited to this arrangement, and more or fewer servers 910 and third party terminals 930 may be incorporated within the system 900. Moreover, the third party terminals 930 are not limited to traders, but may also include other users and entities, such as certain representatives and post-trade processing facilities. The third party terminals 930 may communicate with one another directly via a network, for example, or through the server 910.

The market data sources 940 may provide market data, such as the quote information that populates the product unit displays described above, as well as other trading data, such as the underlying price data, to support the quote. The information provided by the market data sources 940 may be continuously provided. Examples of market data sources include, but are not limited to, various exchanges, brokers, and electronic systems, such as systems that provide and deliver market data. Moreover, market data may also be provided from the third party terminals 930 via APIs as described above.

The quote management software application 920 may, via various modules, provide users with the functionality to create, edit, update, and access product unit displays. For example, when executed, the straddle management software application 920 causes the server 910 to provide an interface to the first party terminal 930a and the second party terminal 930b. The interface may include a product unit display, such as the displays 100-500 described above. Additionally or alternatively, the interface may include the boxes 600 and 700 described above.

The server 910 receives a financial product quote for a particular product, groups the financial product quote with other financial product quotes for the particular product according to a first sort attribute, orders the financial product quotes according to a second sort attribute for each grouping according to the first sort attribute, and displays a product unit display for the particular product on the interface, wherein the product unit display includes an ordered listing of a predefined number of financial product quotes according to the second sort attribute for each grouping according to the first sort attribute.

Thus, the quote management software application 920 and the server 910 provide customizable views of one or more product unit displays to a user. The quote management software application 920 and the server 910 serve to receive market data representing quotes and trades thereof, and provide this information to the user through an interface. The quote management software application 920 and the server 910 also provide the various functionalities related to user preferences, such as the preferences dialog box 600 and the reply box 700.

The various components described herein with respect to the system 900 may include one or more computing devices, hand-held communication devices, mobile computers, and/or any other electronic communication means. The components may be described in the general context of comprising computer-executable instructions, such as program modules, being executed by a computer. Generally, program modules may include routines, programs, objects, components, data structures, or the like that perform particular tasks or implement particular abstract data types.

While some of the embodiments described above are with reference to straddle quotes, the features and aspects may be applied to other types of financial products and instruments. Thus, according to additional embodiments, a product unit display provided at a trade console for a user may include fewer or additional columns to provide relevant quote and trade information to the user. The relevant quote and trade information may vary according to the particular type of financial product.

## Claims

1. A method for managing quotes at a trade console utilizing at least one computing device comprising a memory for storing instructions and a processor for executing said instructions to perform the steps of:
providing an interface;
electronically receiving a financial product quote for a particular product, wherein the financial product quote is one or more of a firm bid to buy, a firm offer to sell, an indication to buy, an indication to sell, a trade at a certain price, and an invitation to join a trade at a certain price;
grouping the financial product quote with other financial product quotes for the particular product according to a first sort attribute;
for each grouping according to the first sort attribute, ordering the financial product quotes according to a second sort attribute; and
displaying a product unit display for the particular product on the interface, wherein the product unit display includes an ordered listing of a predefined number of financial product quotes according to the second sort attribute for each grouping according to the first sort attribute.

2. The method of claim 1, wherein the first sort attribute comprises a term, wherein a term is a single expiry of the particular product, of an option on the particular product, or of a grouping of options on the particular product; or wherein a term is a composition of expiries of the particular product, of options on the particular product, or of groupings of options on the particular product.

3. The method of claim 2, wherein the grouping according to the first sort attribute takes into account a number of expiries in the term and an expiration of a furthest dated expiry in the term.

4. The method of anyone of claims 1 to 3, wherein the second sort attribute comprises one or more of (i) a spread value between a bid and an ask for the financial product quote, wherein the ordering is smallest to largest or largest to smallest; (ii) a time of receipt of the financial product quote, wherein the ordering is most recent to oldest or oldest to most recent; (iii) a deviation or a difference between a strike price and an underlying price for the financial product quote, wherein the ordering is closest to furthest or furthest to closest; (iv) a source of the financial product quote, wherein the ordering is most preferred source to least preferred source; (v) a quality of the financial product quote, wherein the ordering is firm price to indicative price or indicative price to firm price; (vi) a strike price for the financial product quote, wherein the ordering is largest to smallest or smallest or largest; and (vii) a user-supplied value, wherein the ordering is based on a user-supplied ordering.

5. The method of claim 4, wherein if the second sort attribute comprises more than one attribute, the second sort attributes are assigned a priority to be taken into account for the ordering of the financial product quotes.

6. The method of anyone of claims 1 to 5, further comprising:
creating a synthetic group according to the first sort attribute if no financial product quotes have been received for that particular first sort attribute or if no financial product quotes for that particular first sort attribute match the second sort attribute.

7. The method of anyone of claims 1 to 6, wherein electronically receiving a financial product quote for a particular product comprises electronically receiving the financial product quote from one or more data sources via one or more of a user interface, an application programming interface, an instant message, an email message, a voice message, and an order message through an electronic system.

8. The method of claim 7, wherein electronically receiving a financial product quote for a particular product comprises combining aspects of two or more financial product quotes to create a synthetic financial product quote, wherein the two or more financial product quotes are received from one or more data sources.

9. The method of anyone of claims 1 to 8, wherein the product unit display further comprises fields that display information related to the financial product quote, wherein the information is received from one or more data sources.

10. The method of anyone of claims 1 to 9, further comprising:
sending one or more financial product quotes through an application programming interface (API);
receiving user input related to the financial product quote through the API; and
displaying the user input in the product unit display.

11. The method of anyone of claims 1 to 10, wherein the financial product quote is a straddle quote on the particular product, said straddle quote comprising a term and a strike.

12. The method of anyone of claims 1 to 11, wherein the product unit display further comprises a reply selection field configured to allow a user to respond to a financial product quote, wherein the reply is sent via one or more of an instant message, an email message, a voice message, and an order message through an electronic system.

13. The method of anyone of claims 1 to 12, wherein the product unit display further comprises
- one or more subviews each associated with a corresponding grouping, wherein the subview comprises an ordered listing of a remainder of or a portion of financial product quotes outside of the predefined number of financial product quotes according to the second sort attribute; and/or
- one or more menus, selection fields, and dropdown bars configured to allow a user to specify the first sort attribute, the second sort attribute, and the predefined number of financial product quotes.

14. The method of anyone of claims 1 to 13, further comprising:
displaying multiple product unit displays on the interface, wherein each product unit display corresponds to a particular product.

15. A system for managing quotes at a trade console, the system comprising:
a quote management software application stored on a server, the quote management software application providing functionality to display financial product quotes;
one or more user third party terminals coupled to the server, the user third party terminals comprising a data interface for accessing the server and the quote management software application stored thereon, and
one or more market data sources coupled to the server for providing market data to the server;
wherein the quote management software application, when executed, causes the server to perform a method of anyone of claims 1 to 14.
